# EUROPEAN PATENT SPECIFICATION

(11) **EP 3 716 818 B1**
(45) Date of publication and mention of the grant of the patent: **28.06.2023**
(21) Application number: 18803783.2
(22) Date of filing: 26.10.2018
(51) Int. Cl.: A47G 9/02

(54) **RECYCLABLE QUILT**
RECYCLEBARE STEPPDECKE
ÉDREDON RECYCLABLE

(30) Priority: 29.11.2017 IT 201700137134
(43) Date of publication of application: 07.10.2020
(73) Proprietor: Trovi, Roberto, 51039 Quarrata (Pistoia) (IT); Dolfin, Franco, 41058 Vignola (MO) (IT); Caso, Antonio, 51100 Pistoia (IT); Tonini, Piero, 51100 Pistoia (IT)
(72) Inventor: Trovi, Roberto, 51039 Quarrata (Pistoia) (IT); Dolfin, Franco, 41058 Vignola (MO) (IT); Caso, Antonio, 51100 Pistoia (IT); Tonini, Piero, 51100 Pistoia (IT)
(74) Representative: Firmati, Leonardo
(86) International application number: PCT/IB2018/058360
(87) International publication number: WO 2019/106453

(56) References cited:
- EP-A2- 0 057 985
- EP-A2- 1 114 602
- DE-U1-202014 010 677
- FR-A1- 2 438 454
- JP-A- H 108 361
- JP-A- 2017 070 350
- KR-B1- 100 972 002

## Description

### Technical field

The invention relates to the field of quilts.

More specifically, the invention relates to a recyclable quilt, a machine and a relative method for recycling quilts.

### Background art

The quilting of textile products is a production process carried out by linking together textile structures, by means of suitably positioned and spaced stitches, which often also comprise support or padding materials.

The quilting allows multilayer or padded textile products to be made which are embellished with the selection of textures and patterns defined by the switching on the outer layers.

It is therefore a very widespread process for making of goods which are aesthetically pleasing, such as: furnishing fabrics, non-woven fabrics for padding, mattresses, bedspreads, baby items and fashion items.

Due to the large diffusion of quilted products, and thus the volume and the value of the materials which they use, the need is increasingly felt to find new methods for their recycling and for simplifying the existing methods, to favour the re-use of the parts and the fibres contained therein once they have reached the end of their life.

Is also known that the industrial production of quilted products and the use of the same quilted products for the industrial production of goods generates a significant quantity of industrial waste, comprising fabrics and non-fabrics which are often in excellent condition, sewn together in layers.

In order to recycle quilted products it is necessary to separate the layers and the padding, in such a way as to direct each of these towards the specific area for recycling.

Disadvantageously, removal or cutting the stitching between the various layers which make up a quilted product is a complicated and laborious operation, which risks irreversibly damaging or deforming the various layers to be reused.

Due to the cost and time related to the operation for separating the various layers, it is quite common to completely abandon both the recycling of quilted products at the end of their life and the production offcuts, which are generally discarded in the form of waste, with a significant economic and environmental cost linked to the processing of this waste, both for the individual and for the general public.

Examples of prior art quilted fabrics are described in patent documents DE202014010677U1, JP2017070350A, EP1114602A2, FR2438454A1, KR100972002B1, EP0057985, JPH108361.

### Disclosure of the invention

In this context, the technical purpose which forms the basis of the invention is to provide a recyclable quilt, a machine and a method for recycling quilts which overcome at least some of the above-mentioned drawbacks of the prior art.

More specifically, the aim of the invention is to provide a recyclable quilt, a machine and a method for recycling quilts which is able to reduce the work load, the complexity and economic cost of the existing methods for recycling quilts.

A further aim of this invention is to provide a recyclable quilt, a machine and a relative method for recycling quilts which is able to reduce the environmental impact of the production of quilts and encourage their recycling.

The technical purpose indicated and the aims specified are substantially achieved by a recyclable quilt according to claim 1, a method for recycling quilts according to claim 8 and a machine for recycling quilts according to claim 10.

The dependent claims correspond to possible different embodiments of the invention.

Further features and advantages of this invention are more apparent from the non-limiting description which follows of a preferred non-limiting embodiment of a recyclable quilt, of a machine and a relative method for recycling quilts.

### Brief description of the drawings

The description is set out below with reference to the accompanying drawings which are provided solely for purposes of illustration without restricting the scope of the invention and in which:
- Figure 1 shows a view partly in cross-section of a recyclable quilt made in accordance with the invention;
- Figure 2A shows a cross-section view of a detail of the recyclable quilt of Figure 1;
- Figure 2B shows a cross-section view of the detail of Figure 2A made according to an alternative embodiment in accordance with the invention;
- Figure 2C shows a cross-section view of the detail of Figure 2A made according to a further alternative embodiment in accordance with the invention;
- Figure 3 shows a view partly in cross-section of the recyclable quilt of Figure 1, in accordance with an operating step of a method for recycling quilts, according to the invention;
- Figure 4 shows a cross-section view of the detail of Figure 2B, in accordance with an operating step of a method for recycling quilts, according to the invention;
- Figure 5 shows a schematic representation of a machine for recycling quilts in accordance with the invention.

### Detailed description of preferred embodiments of the invention

With reference to the drawings, a recyclable quilt according to the invention is indicated generically by the numeral 1.

The quilt 1 comprises an upper layer 10 and a lower layer 20, preferably made of fabrics for furnishing and bedding items such as, for example, cotton, linen, silk, wool, synthetic fibres or a combination of these.

Without limiting the scope of the invention, both the upper layer 10 and the lower layer 20 may be formed by a single piece of fabric or comprise a plurality of pieces of fabric sewn together.

They may also consist of non-woven fabrics, for example spunbonded, or equivalent materials such as leather, faux leather and leatherette.

The quilt 1 comprises a padding 30 interposed between the upper layer 10 and the lower layer 20, in such a way as to form a sandwich, wherein the upper layer 10 and the lower layer 20 give the quilt 1 the resistance to tearing and pulling and the surface characteristics to touch, whilst the inner padding 30 determines the characteristics of thermal conductivity, elasticity and softness.

The materials for the padding 30 are selected for quality and quantity as a function of the degree of thermal insulation desired and the range of price and comfort of the quilt 1.

Possible materials comprise, for example, goose plumage such as down and plumule, wadding made from cellulose or other natural or synthetic fibres.

The upper layer 10 and lower layer 20, located on respective opposite sides of the padding 30, are joined by means of a stitching 40, which constrains the above-mentioned layers along predetermined lines and is made by a plurality of stitches, distributed along the above-mentioned predetermined lines.

The stitching 40 is configured in such a way as to enclose the padding 30 between the two upper 10 and lower 20 layers by means a variable force according to the desired properties of softness, weight and elasticity and the type of padding 30 used.

The stitching 40 comprises at least one heat-sensitive sewing thread 42, made of a material having a temperature of change of state or softening which is less than the temperature of degradation of the other components of the quilt 1, in particular of the upper layer 10 and the lower layer 20 and the padding 30.

The stitches 40 are sewn in such a way that a softening or a change of state of the heat-sensitive sewing thread 42 causes the break up of the stitching 40.

The expression temperature of change of state or softening is used to mean a temperature at which the tensile strength characteristics of the heat-sensitive sewing thread 42 decline by at least an order of magnitude, due for example to a melting or total or partial sublimation of it.

Preferably, the heat-sensitive sewing thread 42 is made from non-inflammable materials, at least at temperatures equal to, lower than or close to the above-mentioned temperature of change of state or softening.

The degradation temperature means the temperature at which the relative component of the quilt 1 undergoes an appreciable variation of the relative physical and/or aesthetic characteristics.

It is, for example, a temperature of change of state, softening or combustion of the materials constituting the above-mentioned components.

Advantageously, the heat-sensitive sewing thread 42 is produced with fibres with a low melting point, preferably having a temperature of change of state or softening of between 50°C and 200°C, even more preferably between 70°C and 140°C, for example co-polyester, co-polyamide, polypropylene or a combination of these.

According to one embodiment, the heat-sensitive sewing thread 42 is a single thread twisted in an S or Z shape, whilst in an alternative embodiment it consists of two or more threads twisted in an SZ or ZS shape.

The heat-sensitive sewing thread 42 has a sizing or a lubricating finishing of between 15% or 0.1%, even more preferably between 8% and 2%, in such a way as to reduce the friction coefficient.

Advantageously, the lubricating treatment of the heat-sensitive sewing thread 42 allows its use on sewing machines, embroidery machines and quilting machines also of the high speed multi-needle type, limiting the heating due to friction and the consequent deterioration of the mechanical properties of resistance to breaking and elongation which, due to the intrinsic features of the low melting point fibres used, would be particularly apparent in the case of heat-sensitive sewing thread 42.

Preferably, the lowest of the degradation temperatures between the upper layer 10, lower layer 20 and padding 30 is greater than the temperature of change of state or softening of the heat-sensitive sewing thread 42 by at least 30°C, even more preferably by at least 100°C.

According to a first embodiment, the stitching 40 comprises one or more heat-sensitive sewing threads 42, which pass completely through the upper layer 10, the padding 30 and the lower layer 20 to define a plurality of stitches.

When the temperature of change of state or softening of the heat-sensitive sewing thread 42 is reached, the stitching 40 degrades completely, dispersing into the air, impregnating the upper layer 10 or lower layer 20, or weakening sufficiently to allow a reciprocal mechanical separation of the upper layer 10 and lower layer 20 without damaging relative portions.

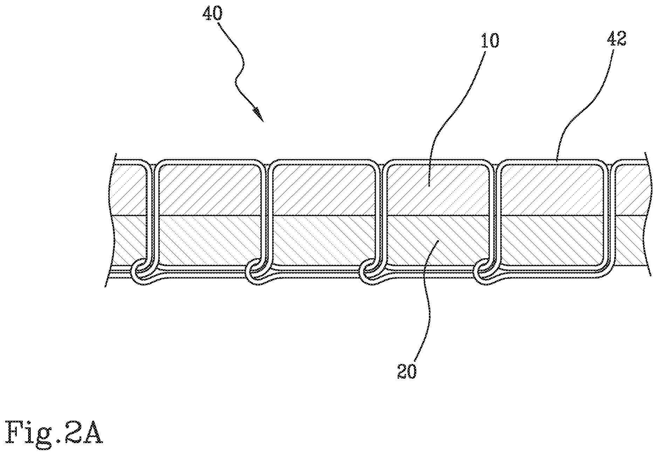

In the solution illustrated in Figure 2A the stitches 40 are a single thread, that is to say, belonging to stitch classes 100 or 200 (as identified in the table prepared by the US Federal Specifications Board), in particular, simple chain stitches as per, for example, stitch type 101, illustrated. According to another embodiment, not illustrated, the stitch 40 comprises two or more rows of heat-sensitive stitches 42 to define a plurality of multiple thread stitches of classes 300, 400, 500 o 600, wherein each sewing thread is of the heat-sensitive type.

With regard to the recyclability of the quilt 1, this solution is conceptually equivalent to the one described above.

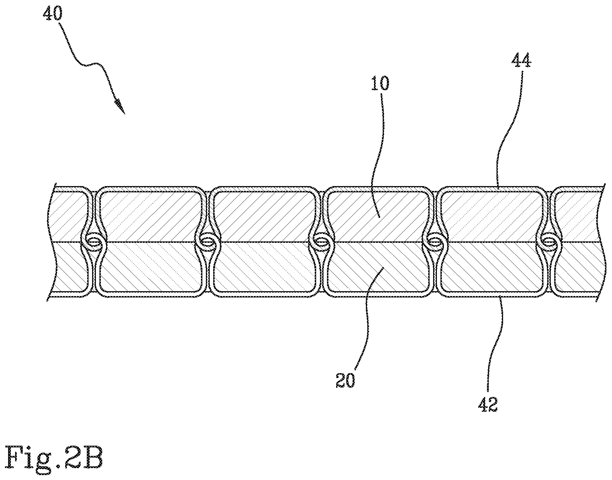

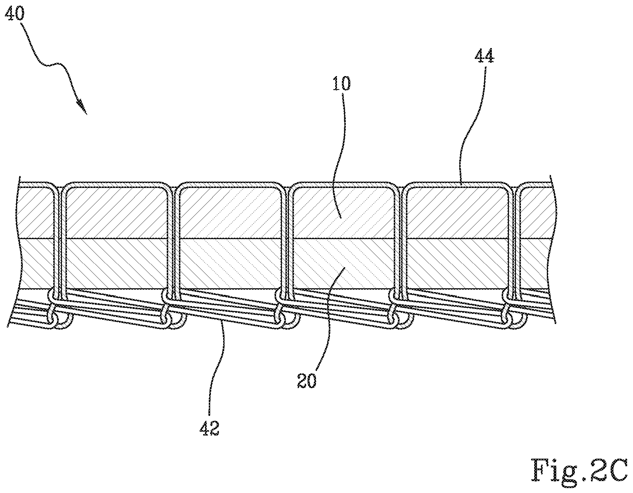

According to the second embodiment, illustrated in Figures 2B and 2C, the stitching 40 comprises at least one pair of stitching threads, of which at least one heat-sensitive sewing thread 42, preferably only one, and at least one conventional sewing thread 44, wherein the heat-sensitive sewing thread 42 has a temperature of change of state or softening which is less than the temperature of degradation of the conventional sewing thread 44.

Preferably, the temperature of change of state or softening of the heat-sensitive sewing thread 42 is less than the temperature of degradation of the conventional sewing thread 44 by at least 50 °C, even more preferably by at least 100°C.

According to the embodiment of Figure 2B, the heat-sensitive sewing thread 42 passes partly through at least one between the upper layer 10, the padding 30 and the lower layer 20 defining, together with the conventional sewing thread 44, a plurality of multiple thread stitching points.

Preferably, the heat-sensitive sewing thread 42 and the conventional sewing thread 44 are positioned on respective opposite sides of the quilt 1, defining, for example, knotted points of the class 300, as in the solution of Figure 2B, wherein the heat-sensitive sewing thread 42 and the conventional sewing thread 44 are coupled for forming the stitch 301. Advantageously, this solution makes it possible to heat only one side of the stitching 40 to break it down.

According to the embodiment of Figure 2C, the conventional sewing thread 44 passes completely through the upper layer 10 and the lower layer 20, whilst the heat-sensitive sewing thread 42 is coupled to it for making a complementary part of the stitching 40, outside the upper layer 10 and lower layer 20, to define a plurality of stitches preferably of class 400, or double chain stitches. According to this embodiment, a heating of the heat-sensitive sewing thread 42 beyond its softening or change of state temperature allows the stitching 40 to be broken by a pulling of the conventional sewing thread 44. Advantageously, the fact of keeping the heat-sensitive sewing thread 42 outside the upper layer 10 and lower layer 20 and the padding 30 prevents or reduces the dispersion of any molten material of the heat-sensitive sewing thread 42 into the recycling material.

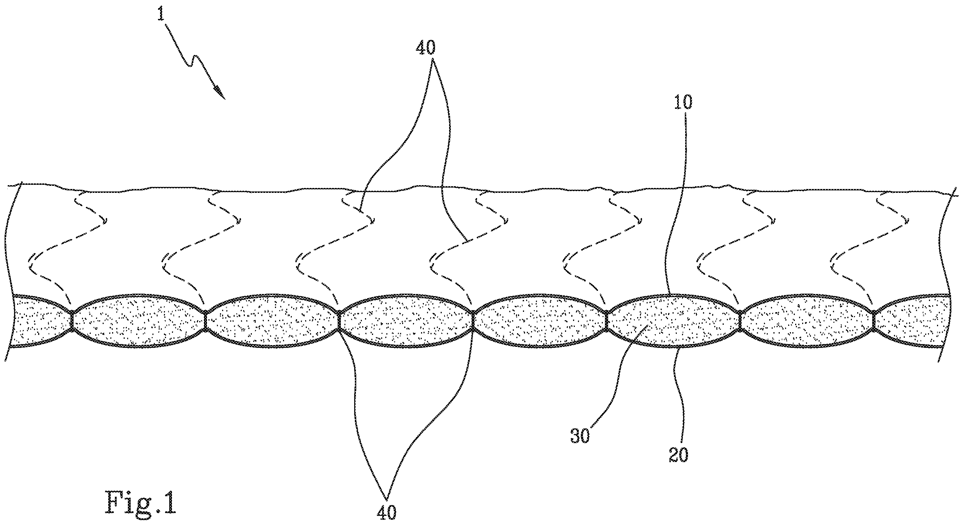

Another object of the invention is a method for recycling quilts, comprising a step of preparing a recyclable quilt 1 of the type described above and illustrated in Figure 1.

The method then comprises a step of heating the stitching 40 of the quilt 1 to the temperature of change of state or softening of at least one heat-sensitive sewing thread 42, of the type described above, preferably between 50°C and 200°C, even more preferably between 70°C and 140°C.

The step of heating the stitching 40 may be carried out, for example, by means of one or more of the following techniques: jets of steam, irradiation from hot surface, infrared irradiation, exposure to microwaves and forced convection.

Moreover, according to the structure of the stitching 40, the method in some embodiments comprises the step of heating only one side of the stitching 40, at the upper layer 10 or the lower layer 20.

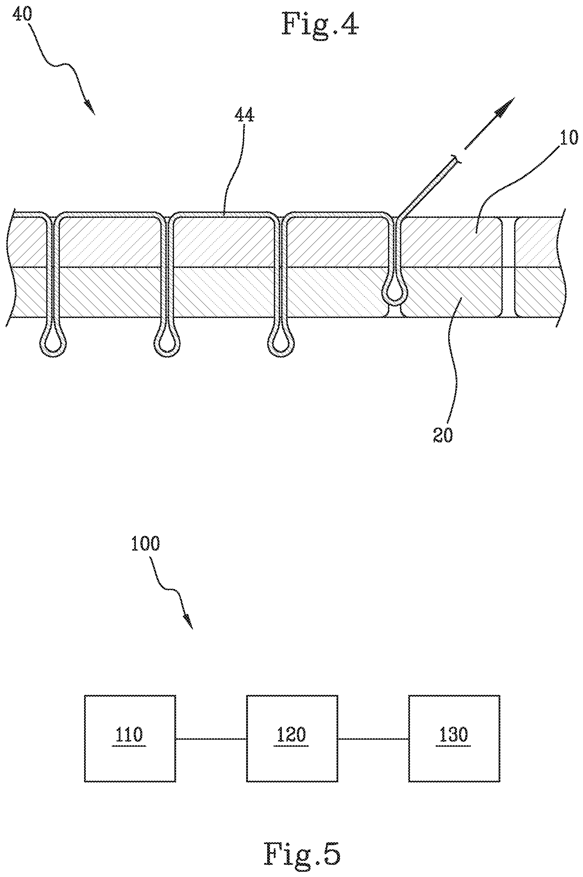

Subsequently, according to an embodiment wherein the stitching 40 comprises a conventional sewing thread 44 which passes at least partly through at least one of the layers of the quilt 1 and is coupled to a heat-sensitive sewing thread 42 to form the stitches 40 (Figures 2B and 2C), the method according to the invention comprises a step of applying a pulling action on the conventional sewing thread 44, in such a way to withdraw it after it has been freed by the change of state or softening of the heat-sensitive sewing thread 42, as illustrated in Figure 4.

In the embodiment wherein the stitching 40 comprises exclusively one or more heat-sensitive sewing threads 42, this step is omitted.

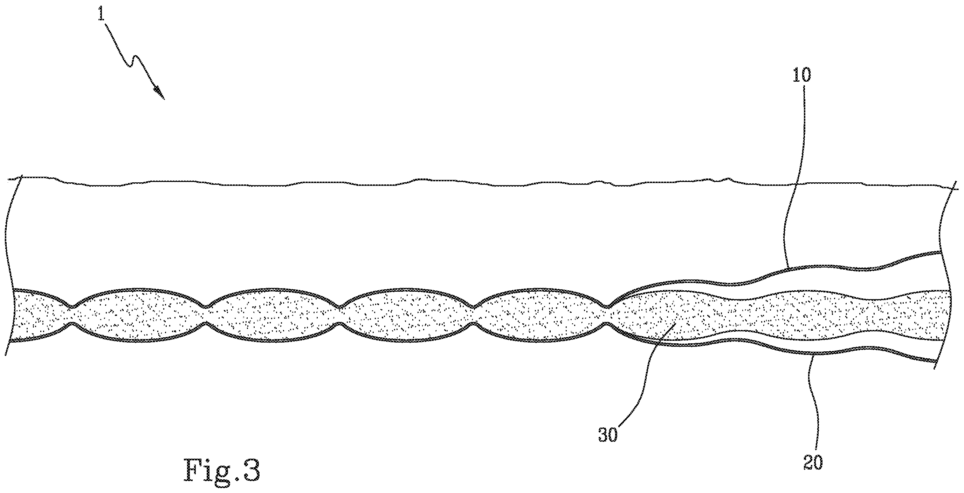

Subsequently, the method according to the invention comprises a step of mechanically separating the upper layer 10, the lower layer 20 and/or the padding 30 of the quilt 1 so that they can be assigned to recycling separately (Figure 3).

Another object of the invention is a machine 100 for recycling quilts, illustrated schematically in Figure 5 and applicable to a quilt 1 of the recyclable type described above.

The machine 100 comprises a heating station 110, configured for heating a stitching 40 of a quilt 1 of the type described above, to a temperature of change of state or softening of at least one heat-sensitive sewing thread 42 of the stitching 40, in the same way as described above for the relative method.

The heating station 110 is preferably configured to use of at least one of the following heating means: jets of steam, irradiation from hot surface, infrared irradiation, exposure to microwaves and forced convection.

Preferably, the machine 100 comprises a separating station 130, configured for mutually separating the lower layer 20, the upper layer 10 and/or the padding 30 of the quilt 1, after the break up of the stitching 40. In at least one embodiment, the machine 100 also comprises an unstitching station 120, wherein pulling means are configured to act on a conventional sewing thread 44 of the stitching 40 for determining a break up, after a heating of the heat-sensitive sewing thread 42 beyond its softening or change of state temperature.

Also shown is a heat-sensitive sewing thread 42 suitable for the production of a recyclable quilt 1 of the recyclable type described above, in particular of the stitching 40.

Preferably, the heat-sensitive sewing thread 42 comprises: a single thread twisted in an S or Z shape, or two or more threads twisted in an SZ or ZS shape or one or more threads which are not twisted, that is to say, parallel. The heat-sensitive sewing thread 42 is produced with fibres with a low melting point, preferably having a temperature of change of state or softening of between 50°C and 200°C, even more preferably between 70°C and 140°C, for example co-polyester, co-polyamide, polypropylene or a combination of these.

The heat-sensitive sewing thread 42 has a sizing or a lubricating finishing of between 15% or 0.1%, even more preferably between 8% and 2%, in such a way as to reduce the friction coefficient to allow use on sewing machines, embroidery machines and quilting machines also of the high speed multi-needle type, limiting the heating due to friction to prevent its temperature from approaching the above-mentioned change of state or softening temperature, which would result in a risk of breakage of the thread.

The invention achieves the set aim by overcoming the drawbacks of the prior art. More specifically, the recyclable quilt described may be separated into its basic components by means of heating the heat-sensitive sewing thread and a physical separation of the parts. Advantageously, this process is considerably easier and faster than the physical cutting of the stitches carried out in the prior art and does not result in any damage to the components of the quilt.

## Claims

1. A recyclable quilt (1), comprising: an upper layer (10),
a lower layer (20), and a stitching (40) which passes through the upper layer (10) and the lower layer (20) for a mutual joining together, said stitching (40) comprising at least one heat-sensitive sewing thread (42), having a temperature of change of state or softening which is lower than the temperatures of degradation of the upper layer (10) and lower layer (20), in such a way that a change of state or softening of the heat-sensitive sewing thread (42) causes the break-up of the stitching (40), **characterised in that** the at least one heat-sensitive sewing thread (42) having one or more twisted ends made of co-polyester and/or co-polyamide and/or polypropylene, provided with a sizing and/or a lubricating finishing of between 15% and 0.1 %, preferably between 8% and 2%, and **in that** the stitching (40) comprises at least one conventional sewing thread (44) coupled with the at least one heat-sensitive sewing thread (42) to define a plurality of stitched points, preferably knotted points or double chain points, wherein the at least one heat-sensitive sewing thread (42) has a temperature of change of state or softening which is less than temperature of degradation of the at least one conventional sewing thread (44).

2. The quilt (1) according to claim 1, also comprising a padding (30) interposed between the upper layer (10) and the lower layer (20), wherein the heat-sensitive sewing thread (42) has a temperature of change of state or softening which is lower than the temperatures of degradation of the padding (30).

3. The quilt (1) according to claim 2, wherein the difference between the lowest temperature of degradation of the upper layer (10), the lower layer (20) and the padding (30) and the temperature of change of state or softening of the at least one heat-sensitive sewing thread (42) is at least 50°C, preferably at least 100°C.

4. The quilt (1) according to any one of the preceding claims, wherein the at least one heat-sensitive sewing thread (42) has a temperature of change of state or softening of between 50°C and 200°C, preferably between 70°C and 140°C.

5. The quilt (1) according to any one of the preceding claims, wherein the at least one heat-sensitive sewing thread (42) passes completely through the upper layer (10) and lower layer (20) to define a plurality of stitched points, preferably simple chain thread points.

6. The quilt (1) according to any one of the preceding claims, wherein the at least one heat-sensitive sewing thread (42) has a temperature of change of state or softening which is less than a temperature of degradation of the at least one conventional sewing thread (44) by least 50°C, preferably 100°C.

7. The quilt (1) according to any one of the preceding claims, wherein at least one conventional sewing thread (44) passes completely through the upper layer (10) and the lower layer (20) and the heat-sensitive sewing thread (42) is positioned outside the upper layer (10), the lower layer (20) and the padding (30).

8. A method for recycling quilts, comprising the steps of:
- preparing a quilt (1), preferably made according to any one of the previous claims, comprising an upper layer (10) and a lower layer (20), joined by stitching (40), the stitching (40) comprising at least one heat-sensitive sewing thread (42), having a temperature of change of state or softening which is lower than the temperatures of degradation of the upper layer (10) and lower layer (20), in such a way that a change of state or softening of the heat-sensitive sewing thread (42) causes the break up of the stitching (40);
- heating the stitching (40) to a temperature of change of state or softening of the at least one heat-sensitive sewing thread (42);
- mutually separating the upper layer (10) and the lower layer (20).

9. The method according to claim 8, wherein the stitching (40) comprises at least one heat-sensitive sewing thread (42) and at least one conventional sewing thread (44), coupled to define a plurality of stitched points, preferably knotted points or double chain points, wherein the at least one heat-sensitive sewing thread (42) has a temperature of change of state or softening which is less than a temperature of degradation of the at least one conventional sewing thread (44), the method comprising, after the step of heating the stitching (40), a step of exerting a pulling action on the conventional sewing thread (44).

10. A machine (100) for recycling quilts, in particular for the method according to claim 8 or 9, comprising a heating station configured for heating a stitching (40) of a quilt (1) up to a temperature of change of state or softening of at least one heat-sensitive sewing thread (42) of the stitching (40), and a separating station configured for mutually separating the lower layer (20), the upper layer (10) and/or the padding (30) of the quilt (1), **characterised in that** it comprises traction means configured for acting on at least one conventional sewing thread (44) of the stitching (40) for determining a break-up of the stitching (40).

11. The machine (100) according to claim 10, wherein the heating station comprises steam and/or irradiation and/or infrared and/or forced convection and/or microwave heating means.

## Patentansprüche

1. Recycelbare Steppdecke (1), umfassend: eine obere Schicht (10), eine untere Schicht (20) und eine Naht (40), die durch die obere Schicht (10) und die untere Schicht (20) für eine gegenseitige Zusammenfügung führt, wobei die Naht (40) mindestens ein wärmeempfindliches Nähgarn (42) umfasst, das eine Zustandsveränderungs- oder Erweichungstemperatur aufweist, die niedriger ist als die Zersetzungstemperatur der oberen Schicht (10) und der unteren Schicht (20), sodass eine Zustandsveränderung oder Erweichung des wärmeempfindlichen Nähgarns (42) bewirkt, dass die Naht (40) aufbricht, **dadurch gekennzeichnet, dass** das mindestens eine wärmeempfindliche Nähgarn (42) ein oder mehrere verzwirnte Enden aus Co-Polyester und/oder Co-Polyamid und/oder Propylen aufweist, versehen mit einer Schlichtung und/oder einer Gleitausrüstung zwischen 15 % und 0,1 %, vorzugsweise zwischen 8 % und 2 %, und dadurch, dass die Naht (40) mindestens ein herkömmliches Nähgarn (44) umfasst, das mit dem mindestens einen wärmeempfindlichen Nähgarn (42) kaschiert ist, um eine Vielzahl von Stichen zu definieren, bei denen es sich vorzugsweise um Knotenstiche oder Doppelkettenstiche handelt, wobei das mindestens eine wärmeempfindliche Nähgarn (42) eine Zustandsveränderungs- oder Erweichungstemperatur aufweist, die niedriger ist als die Zersetzungstemperatur des mindestens einen herkömmlichen Nähgarns (44).

2. Steppdecke (1) nach Anspruch 1, zudem umfassend eine Füllung (30), die zwischen der oberen Schicht (10) und der unteren Schicht (20) eingesetzt ist, wobei das wärmeempfindliche Nähgarn (42) eine Zustandsveränderungs- oder Erweichungstemperatur aufweist, die niedriger ist als die Zersetzungstemperatur der Füllung (30).

3. Steppdecke (1) nach Anspruch 2, wobei der Unterschied zwischen der niedrigsten Zersetzungstemperatur der oberen Schicht (10), der unteren Schicht (20) und der Füllung (30) und der Zustandsveränderungs- oder Erweichungstemperatur des mindestens einen wärmeempfindlichen Nähgarns (42) mindestens 50 °C, vorzugsweise mindestens 100 °C, beträgt.

4. Steppdecke (1) nach einem der vorhergehenden Ansprüche, wobei das mindestens eine wärmeempfindliche Nähgarn (42) eine Zustandsveränderungs- oder Erweichungstemperatur zwischen 50 °C und 200 °C, vorzugsweise zwischen 70 °C und 140 °C, aufweist.

5. Steppdecke (1) nach einem der vorhergehenden Ansprüche, wobei das mindestens eine wärmeempfindliche Nähgarn (42) vollständig durch die obere Schicht (10) und die untere Schicht (20) führt, um eine Vielzahl von Stichen zu definieren, bei denen es sich vorzugsweise um einfache Kettenstiche handelt.

6. Steppdecke (1) nach einem der vorhergehenden Ansprüche, wobei das mindestens eine wärmeempfindliche Nähgarn (42) eine Zustandsveränderungs- oder Erweichungstemperatur aufweist, die um mindestens 50 °C, vorzugsweise 100 °C, niedriger ist als eine Zersetzungstemperatur des mindestens einen herkömmlichen Nähgarns (44).

7. Steppdecke (1) nach einem der vorhergehenden Ansprüche, wobei das mindestens eine herkömmliche Nähgarn (44) vollständig durch die obere Schicht (10) und die untere Schicht (20) führt und das wärmeempfindliche Nähgarn (42) außerhalb der oberen Schicht (10), der unteren Schicht (20) und der Füllung (30) positioniert ist.

8. Verfahren zum Recyceln von Steppdecken, umfassend die folgenden Schritte:
- Vorbereiten einer Steppdecke (1), die vorzugsweise nach einem der vorhergehenden Ansprüche hergestellt ist, umfassend eine obere Schicht (10), eine untere Schicht (20), die durch eine Naht (40) zusammengefügt sind, wobei die Naht (40) mindestens ein wärmeempfindliches Nähgarn (42) umfasst, das eine Zustandsveränderungs- oder Erweichungstemperatur aufweist, die niedriger ist als die Zersetzungstemperatur der oberen Schicht (10) und der unteren Schicht (20), sodass eine Zustandsveränderung oder Erweichung des wärmeempfindlichen Nähgarns (42) bewirkt, dass die Naht (40) aufbricht;
- Erwärmen der Naht (40) auf eine Zustandsveränderungs- oder Erweichungstemperatur des mindestens einen wärmeempfindlichen Nähgarns (42);
- Trennen der oberen Schicht (10) und der unteren Schicht (20) voneinander.

9. Verfahren nach Anspruch 8, wobei die Naht (40) mindestens ein wärmeempfindliches Nähgarn (42) und mindestens ein herkömmliches Nähgarn (44) umfasst, die kaschiert sind, um eine Vielzahl von Stichen zu definieren, bei denen es sich vorzugsweise um Knotenstiche oder Doppelkettenstiche handelt, wobei das mindestens eine wärmeempfindliche Nähgarn (42) eine Zustandsveränderungs- oder Erweichungstemperatur aufweist, die niedriger ist als die Zersetzungstemperatur des mindestens einen herkömmlichen Nähgarns (44), wobei das Verfahren nach dem Schritt zum Erwärmen der Naht (40) einen Schritt zum Ausüben einer Zugwirkung auf das herkömmliche Nähgarn (44) umfasst.

10. Maschine (100) zum Recyceln von Steppdecken, insbesondere für das Verfahren nach Anspruch 8 oder 9, umfassend eine Heizstation, die ausgelegt ist, um eine Naht (40) einer Steppdecke (1) auf eine Zustandsveränderungs- oder Erweichungstemperatur des mindestens einen wärmeempfindlichen Nähgarns (42) der Naht (40) zu erwärmen, und eine Trennstation, die ausgelegt ist, um die untere Schicht (20), die obere Schicht (10) und/oder die Füllung (30) der Steppdecke (1) voneinander zu trennen, **dadurch gekennzeichnet, dass** sie Traktionsmittel umfasst, die ausgelegt sind, um auf das mindestens eine herkömmliche Nähgarn (44) der Naht (40) zu wirken, um ein Aufbrechen der Naht (40) zu bewirken.

11. Maschine (100) nach Anspruch 10, wobei die Heizstation Dampf-, und/oder Strahlungs- und/oder Infrarot- und/oder Zwangskonvektions- und/oder Mikrowellenheizmittel umfasst.

## Revendications

1. Édredon recyclable (1), comprenant : une couche supérieure (10), une couche inférieure (20), et une piqûre (40) qui traverse la couche supérieure (10) et la couche inférieure (20) pour une jonction mutuelle, ladite piqûre (40) comprenant au moins un fil à coudre thermosensible (42), ayant une température de changement d'état ou de ramollissement étant inférieure aux températures de dégradation de la couche supérieure (10) et de la couche inférieure (20), de telle sorte qu'un changement d'état ou un ramollissement du fil à coudre thermosensible (42) provoque la rupture de la piqûre (40), **caractérisé en ce que** l'au moins un fil à coudre thermosensible (42) comportant une ou plusieurs extrémités torsadées en co-polyester et/ou co-polyamide et/ou polypropylène, pourvu d'un encollage et/ou d'une finition lubrifiante comprise entre 15 et 0,1 %, de préférence entre 8 et 2 %, et **en ce que** la piqûre (40) comprend au moins un fil à coudre conventionnel (44) couplé à au moins un fil à coudre thermosensible (42) pour définir une pluralité de points piqués, de préférence des points noués ou des points à double chaîne, dans lequel l'au moins un fil à coudre thermosensible (42) a une température de changement d'état ou de ramollissement étant inférieure à la température de dégradation de l'au moins un fil à coudre conventionnel (44).

2. Édredon (1) selon la revendication 1, comprenant également un rembourrage (30) interposé entre la couche supérieure (10) et la couche inférieure (20), dans lequel le fil à coudre thermosensible (42) a une température de changement d'état ou de ramollissement qui est inférieure aux températures de dégradation du rembourrage (30).

3. Édredon (1) selon la revendication 2, dans lequel la différence entre la température de dégradation la plus basse de la couche supérieure (10), de la couche inférieure (20) et du rembourrage (30) et la température de changement d'état ou de ramollissement d'au moins un fil à coudre thermosensible (42) est au moins de 50°C, de préférence au moins de 100°C.

4. Édredon (1) selon l'une quelconque des revendications précédentes, dans lequel l'au moins un fil à coudre thermosensible (42) a une température de changement d'état ou de ramollissement comprise entre 50 et 200°C, de préférence entre 70 et 140°C.

5. Édredon (1) selon l'une quelconque des revendications précédentes, dans lequel l'au moins un fil à coudre thermosensible (42) traverse entièrement la couche supérieure (10) et la couche inférieure (20) pour définir une pluralité de points piqués, de préférence des points de fil de chaîne simple.

6. Édredon (1) selon l'une quelconque des revendications précédentes, dans lequel l'au moins un fil à coudre thermosensible (42) a une température de changement d'état ou de ramollissement qui est inférieure à une température de dégradation de l'au moins un fil à coudre conventionnel (44) d'au moins 50°C, de préférence 100°C.

7. Édredon (1) selon l'une quelconque des revendications précédentes, dans lequel au moins un fil à coudre conventionnel (44) traverse entièrement la couche supérieure (10) et la couche inférieure (20) et le fil à coudre thermosensible (42) est positionné à l'extérieur de la couche supérieure (10), de la couche inférieure (20) et du rembourrage (30).

8. Procédé de recyclage d'édredons, comprenant les étapes de :
- préparer un édredon (1), de préférence fabriqué selon l'une quelconque des revendications précédentes, comprenant une couche supérieure (10) et une couche inférieure (20), jointes par une piqûre (40), la piqûre (40) comprenant au moins un fil à coudre thermosensible (42), ayant une température de changement d'état ou de ramollissement qui est inférieure aux températures de dégradation de la couche supérieure (10) et de la couche inférieure (20), de telle sorte qu'un changement d'état ou un ramollissement du fil à coudre thermosensible (42) provoque la rupture de la piqûre (40) ;
- chauffer la piqûre (40) à une température de changement d'état ou de ramollissement de l'au moins un fil à coudre thermosensible (42) ;
- séparer mutuellement la couche supérieure (10) et la couche inférieure (20).

9. Procédé selon la revendication 8, dans lequel la piqûre (40) comprend au moins un fil à coudre thermosensible (42) et au moins un fil à coudre conventionnel (44), couplés pour définir une pluralité de points piqués, de préférence des points noués ou des points de double chaîne, dans lequel l'au moins un fil à coudre thermosensible (42) a une température de changement d'état ou de ramollissement qui est inférieure à une température de dégradation de l'au moins un fil à coudre conventionnel (44), le procédé comprenant, après l'étape de chauffage de la piqûre (40), une étape consistant à exercer une action de traction sur le fil à coudre conventionnel (44).

10. Machine (100) de recyclage d'édredons, en particulier pour le procédé selon la revendication 8 ou 9, comprenant un poste de chauffage configuré pour chauffer une piqûre (40) d'un édredon (1) jusqu'à une température de changement d'état ou de ramollissement d'au moins un fil à coudre thermosensible (42) de la piqûre (40), et un poste de séparation configuré pour séparer mutuellement la couche inférieure (20), la couche supérieure (10) et/ou le rembourrage (30) de l'édredon (1), **caractérisée en ce qu'**elle comprend des moyens de traction configurés pour agir sur au moins un fil à coudre conventionnel (44) de la piqûre (40) pour déterminer une rupture de la piqûre (40).

11. Machine (100) selon la revendication 10, dans laquelle le poste de chauffage comprend des moyens de chauffage à vapeur et/ou à rayonnement et/ou à infrarouge et/ou à convection forcée et/ou à micro-ondes.
